Europäisches Patentamt

European Patent Office

Office européen des brevets

(11) Numéro de publication: **0 378 012**
**A1**

## (12) DEMANDE DE BREVET EUROPEEN

(21) Numéro de dépôt: 89402089.0

(22) Date de dépôt: 24.07.89

(51) Int. Cl.5: **A23L 3/00, A23L 3/10**

(30) Priorité: 24.10.88 FR 8813902

(43) Date de publication de la demande:
18.07.90 Bulletin 90/29

(84) Etats contractants désignés:
AT BE CH DE ES FR GB GR IT LI LU NL SE

(71) Demandeur: **Société anonyme dite:**
**VEGETABLE**
**Chemin du Crève Coeur**
**F-10380 Plancy L'Abbaye(FR)**

(72) Inventeur: **Juillard, Jean-Louis**
**10, rue Alfred Couturier**
**F-78160 Marly le Roi(FR)**

(74) Mandataire: **Pinguet, André**
**Cabinet de Proprieté Industrielle CAPRI 28**
**bis, avenue Mozart**
**F-75016 Paris(FR)**

(54) **Procédé de traitement de produits alimentaires.**

(57) L'invention consiste à appliquer à des aliments tels que soupes, viandes et poissons un procédé de présentation à la vente dans des sachets plastiques sous vide comprenant une première pasteurisation, un développement des bactéries à température intermédiaire et une seconde pasteurisation. Les produits obtenus ne contiennent aucun adjuvant, ne sont pas complètement cuits et se prêtent à de nombreuses recettes.

EP 0 378 012 A1

## PROCEDE DE TRAITEMENT DE PRODUITS ALIMENTAIRES

La présente invention a pour objet le traitement des denrées alimentaires les plus diverses en vue de leur présentation à la vente et a pour but une forme de présentation qui permette une conservation sur une certaine période (par exemple plusieurs mois), éviter l'adjonction de produits chimiques et même de sel (anti-oxygène, conserveur, etc...), traiter les denrées en vue d'une préparation simplifiée et rapide de la cuisine.

On connaît déjà un procédé, décrit dans le brevet français 2 506 127 (Mester Systèmes) adapté au traitement de légumes en vue de leur présentation à la vente. Ce procédé concerne les tubercules et racines, tels que pommes de terre, carottes, navets, salsifis, etc...

Selon ce brevet, les légumes sont triés, épluchés et éventuellement découpés, puis soumis à cinq phases de traitement:
- une première pasteurisation légère, effectuée à une température comprise entre 75 et 85° C;
- un conditionnement sous vide, dans des sachets en matière plastique, l'ordre de ces deux premières opérations étant indifférent, le conditionnement sous vide pouvant être effectué avant la première pasteurisation légère;
- un traitement de développement des spores des bactéries présentes dans les légumes, par séjour des sachets fermés à une température intermédiaire dans une enceinte dont la température est comprise entre 25 et 35° C;
- une seconde pasteurisation à une temperature comprise entre 85 et 90° C;
- et un refroidissement.

Ce procédé est plus intéressant que la stérilisation. La stérilisation requiert du matériel lourd pour travailler à une température dépassant 100° C et généralement de l'ordre de 115 à 125° C. D'autre part, ayant été portés à cette température, les légumes sont surcuits, ce qui limite les applications culinaires. La stérilisation présente donc finalement beaucoup d'inconvénients.

Ce procédé est différent de la Tyndallisation, qui consiste à chauffer à 58° C les liquides organiques, notamment les sérums dans lesquels on veut détruire les microbes, plusieurs jours de suite, pendant deux heures chaque fois. Cette température tue les bactéries mais non les spores; cependant, comme entre les cuissons les spores se transforment en bactéries, celles-ci sont détruites à leur tour. Ce procédé a l'avantage sur l'ébullition de peu modifier la composition chimique. Mais ce procédé n'est pas industrialisable en raison en particulier de la durée et du nombre des cycles.

Le traitement décrit dans le brevet cité ci-dessus repose sur le développement des spores des bactéries contenues dans les légumes, et particulièrement dans les pommes de terre. Ce traitement semblait donc ne pas convenir à d'autres produits, ce que des essais ont confirmé.

Cependant, à la suite de recherches, l'inventeur de la présente demande a constaté que de façon tout à fait inattendue et en apportant des modifications importantes, on obtenait des résultats excellents, en appliquant un traitement similaire non seulement à des fruits, mais aussi, à des soupes, à des viandes, à des poissons, et à des produits composés comme viande et légumes, ou poisson et légumes, c'est-à-dire en fait, non à des plats cuisinés, mais à des préparations utilisables pour faire un plat, par une opération de finition simple et rapide : pas de nettoyage, pas de découpage, cuisson réduite. Ceci est totalement différent d'un plat surgelé ou en conserve.

La présente invention a donc pour objet l'application sensiblement modifiée du procédé rappelé plus haut à tous ces autres produits.

On a également proposé de traiter des produits mis en sachets sous vide, par une stérilisation dans l'eau bouillante ou la vapeur (brevet anglais 785 795).

Or, l'inventeur a constaté que la température d'ébullition provoquait des changements très importants, par rapport à une température de 90 à 95° C, tant sur le plan organoleptique que bactériologique. A 100°, les fibres sont très abîmées alors qu'à 95°, elles conservent une structure qui permet de très nombreuses applications culinaires qui ne sont plus possibles quand le produit a été exposé à une température de 100° C. La pasteurisation, même à 95° C, est très différente de la stérilisation.

Conformément à la présente invention, les opérations de pasteurisation et de développement des spores ont une durée et se déroulent à une température qui sont fonctions des produits traités et de leur présentation (notamment taille des morceaux).

Comme on l'a indiqué plus haut, la mise en sachet sous vide peut être effectuée avant la première pasteurisation, soit à l'état cru, ou après cette opération.

A la différence du brevet cité, la première pasteurisation n'est pas légère et donne simultanément lieu à une précuisson. Il faut que la température de traitement soit transmise à la totalité de la masse de produit traitée, c'est-à-dire au coeur des morceaux, et y soit maintenue assez longtemps. La durée de l'opération est comprise entre vingt et soixante minutes. La température est comprise entre 75 et 95° C et de préférence entre 75 et 90° C. Il est essentiel que la température ne dépasse en aucun cas 95°C. Elle peut être réalisée dans divers appareils, soit en continu, soit par fournées, selon les produits et leur présentation.

Le traitement de développement des spores des bactéries à température intermédiaire est extrêmement important. Ce développement a lieu à une température comprise entre 25 et 40°C. La durée de ce traitement est fonction des produits et de leur présentation ainsi que de la température adoptée. La durée de cette phase de traitement est de 20 à 27 heures. Cette phase de traitement est réalisée dans des chambres d'incubation dans lesquelles la température choisie est rigoureusement respectée ; et les sachets sont de préférence placés dans cette chambre après avoir été positionnés dans des barquettes facilitant leurs manipulations. Avant de rentrer en chambre d'incubation, le produit recevra avantageusement un refroidissement rapide, par exemple par projection d'eau, pour atteindre une température proche de celle de l'incubation.

La deuxième pasteurisation est réalisée à une température comprise entre 75 et 95°C pendant une durée comprise entre 20 et 60 minutes selon les produits et leur présentation, et provoque la destruction des spores de bactéries qui se sont transformées en état végétatif au cours de la phase de traitement précédente. En effet, il est connu que certaines catégories de spores de bactéries peuvent résister plusieurs minutes à une température de plus de 100°C, tandis que ces mêmes spores rendues à l'état végétatif ne résistent pas une température de plus de 70°C pendant quelques minutes. La durée de ce traitement de pasteurisation est fonction, d'une part, de la température à laquelle les produits ont été portés lors de la phase précédente, et d'autre part, des produits et de leur présentation (par exemple grosseur de morceaux).

Un dernier refroidissement peut être réalisé par une projection d'eau à 13°C par exemple.

Les produits ainsi préparés ne subissent à aucun moment de leur préparation un traitement antioxydant ou un traitement de blanchiment nécessitant leur passage dans un bain aqueux contenant un additif risquant d'altérer leurs qualités et de nuire plus ou moins directement à la santé. Ils peuvent être conservés de nombreux mois au réfrigérateur, sans que leur aspect et leurs qualités soient affectés. Des essais ont montré qu'ils pouvaient même être conservés 90 jours à 23°C sans être altérés.

Les produits n'ayant pas été trop cuits au cours de leur traitement, les recettes applicables sont très nombreuses. La cuisine obtenue à l'apparence d'une cuisine fraîche. La structure de la viande ou du poisson n'est pas modifiée par le gel, ou la cuisson complète.

## Revendications

1. Procédé de traitement d'aliments en vue de leur présentation à la vente, placés sous vide dans des sachets en matière plastique, comprenant les étapes suivantes, la mise en sachet sous vide étant effectuée avant, ou après la première étape:
- une première pasteurisation, effectuée à une température comprise entre 75 et 95°C, et de préférence 75 à 90°C ;
- un refroidissement rapide;
- un traitement de développement des bactéries à l'état de spores, présentes dans les aliments pour les amener à l'état végétatif, par séjour des sachets dans une enceinte dont la température est comprise entre 25 et 35°C;
- une seconde pasteurisation à une température comprise entre 75 et 95°C, et de préférence 75 à 90°C;
- et un refroidissement,
caractérisé en ce que le procédé est appliqué à des soupes, des viandes, des poissons, et des mélanges de viande ou de poisson avec des légumes.

2. Procédé selon la revendication 1, caractérisé en ce que la durée de la première pasteurisation est comprise entre 20 et 60 minutes.

3. Procédé selon la revendication 1, caractérisé en ce que la durée de la seconde pasteurisation est comprise entre 20 et 60 minutes.

4. Procédé selon une des revendications précédentes, caractérisé en ce que la durée de la deuxième phase est comprise entre 20 et 27 heures pour des températures comprises entre 25 et 40°C.

5. Procédé selon la revendication 1, caractérisé en ce que les refroidissements sont réalisés par projection d'eau, en particulier à 13°C.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 601 232 (MESTER SYSTEMES)<br>* revendications 1,2 *<br>--- | 1,3,4 | A 23 L 3/00<br>A 23 L 3/10 |
| A | GB-A-2 059 248 (MESTER SYSTEMES)<br>* revendications 1,2 *<br>--- | 1 | |
| D,A | FR-A-2 506 127 (MESTER SYSTEMES)<br>* revendications 1-5 *<br>----- | 1 | |

**DOMAINES TECHNIQUES RECHERCHES (Int. Cl.5)**

A 23 L 3/00

Le présent rapport a été établi pour toutes les revendications

| Lieu de la recherche | Date d'achèvement de la recherche | Examinateur |
|---|---|---|
| BERLIN | 16-03-1990 | SCHULTZE D |